# EUROPÄISCHE PATENTSCHRIFT

(11) **EP 0 578 001 B1**
(45) Veröffentlichungstag und Bekanntmachung des Hinweises auf die Patenterteilung: **21.08.1996**
(21) Anmeldenummer: 93109460.1
(22) Anmeldetag: 14.06.1993
(51) Int. Cl.: G07F 7/08, G07F 7/02, G06K 19/07, G06K 19/073

(54) **Elektronische Einrichtung zum Auslösen einer Funktion mittels eines Schlüsselelements**
Electronic device to start a function using a key
Dispositif électronique pour engendrer une fonction au moyen d'une clé

(30) Priorität: 19.10.1992 DE 9214097 U; 04.07.1992 DE 9208990 U
(43) Veröffentlichungstag der Anmeldung: 12.01.1994
(73) Patentinhaber: Boretius, Michael, Dipl.Ing. (FH), W-86152 Augsburg (DE)
(72) Erfinder: Boretius, Michael, Dipl.Ing. (FH), W-86152 Augsburg (DE)
(74) Vertreter: Gallo, Wolfgang, Dipl.-Ing. (FH)

(56) Entgegenhaltungen:
- EP-A- 0 358 525
- WO-A-86/02187
- CH-A- 612 777
- GB-A- 2 020 869
- ELECTRONIQUE, Nr. 11, Oktober 1991, Paris FR, Seite 16; F. GROSVALET : "Le silicium pour remplacer le code barre"

## Beschreibung

Die Erfindung betrifft eine elektronische Einrichtung zum Auslösen einer Funktion mittels eines Schlüsselelements.

Bekannte Einrichtungen dieser Art sind beispielsweise Magnetkarteneinrichtungen, die mit einer Magnetkartenleseeinheit und einer Magnetkarte als Schlüsselelement arbeiten. Solche Einrichtungen finden beispielsweise zum Öffnen von Parkhausschranken, zum Öffnen von Türen für berechtigte Personen, bei Geldautomaten usw. Anwendung. Die betreffende Funktion, zum Beispiel Öffnen der Parkhausschranke, Entriegelung einer Tür oder Ausgabe von Geld erfolgt, wenn auf der Magnetkarte ein bestimmter Code gespeichert ist und ggf. zusätzlich, beispielsweise bei Sicherheitsschleusen oder Geldautomaten, eine den Benutzer der Magnetkarte als rechtmäßigen Besitzer ausweisende Identifikationszahl eingetippt wird.

Magnetkartenleseeinheiten sind jedoch sehr teuer und störanfällig. Außerdem sind Magnetkartensysteme in der Handhabung nicht ganz unproblematisch, weil zum Ablesen der gespeicherten Information eine wohldefinierte Bewegung erforderlich ist. Beim Schlitzleser ist es notwendig, daß der Benutzer beim Hindurchschieben der Magnetkarte eine möglichst gleichförmige Bewegung mit der Hand ausführt. Bei motorgetriebenen Magnetkartenlesern ist zwar insoweit eine sichere Übertragung gewährleistet, aber das Einführen der Karte in den Leserschlitz erfordert große Sorgfalt. Außerdem gilt es hier, eine psychologische Hemmschwelle zu überwinden, wenn die Karte im Leser verschwindet. Nicht zuletzt sind Magnetkartensysteme wegen der Leseschlitze auch immer anfällig für Sabotage, wobei eine Reparatur sehr teuer werden kann.

Andere bekannte Einrichtungen dieser Art arbeiten mit Lochchips als Schlüsselelement. Sie dienen beispielsweise dazu, ein bestimmtes variables Arbeitsprogramm einer Anlage zu starten, beispielsweise einer Autowaschanlage. Ein Abtaster in einem Leseschlitz reagiert auf die Anordnung der Löcher in einem eingelegten Chip und löst dadurch eine bestimmte Signalfolge aus.

Eine solche Einrichtung ist zwar bei weitem weniger störanfällig und mit Handhabungsproblemen behaftet als ein Magnetkartensystem, weist aber vor allen Dingen den Nachteil auf, das sie für Funktionen im Sicherheitsbereich schon deshalb als unbrauchbar ausscheidet, weil das Schlüsselelement seinen Dateninhalt in Form einer Lochanordnung aufweist und diese offen sichtbar, also von unbefugten Personen identifizierbar, und nicht fälschungssicher ist.

Aus der WO-A-86/02187 ist am Beispiel einer Parkuhr oder eines Verkaufsautomaten eine Einrichtung bekannt, bei der eine Funktion, nämlich Parkgebührenabbuchung, Zahlung und Warenausgabe aus einem Verkaufsautomaten etc., mittels eines elektronischen Schlüsselelements auslösbar ist, das in eine entsprechende schlitzförmige Aufnahmeöffnung der Einrichtung eingesteckt wird. Das elektronische Schlüsselelement enthält einen Speichermodul, in dem Daten gespeichert und auslesbar bzw. austauschbar sind.

Dieses elektronische Schlüsselelement weist zwar gegenüber den bekannten Magnetkartensystemen den Vorteil auf, daß in dem Speichermodul ebenso wie bei der Magnetkarte die gespeicherten Daten zwar maschinenlesbar, im übrigen aber unsichtbar und nicht identifizierbar sind. Allerdings weist das bekannte elektronische Schlüsselelement bzw. die Aufnahmeöffnung der damit betätigten Einrichtung eine Mehrzahl von Kontakten auf, die beim Einstecken des Schlüsselelements miteinander in Berührung gebracht werden müssen, so daß sowohl das Schlüsselelement wie auch die Aufnahmeöffnung der Einrichtung recht kompliziert ausgebildet sind und, das gilt insbesondere für die Aufnahmeöffnung für das Schlüsselelement an der betreffenden Einrichtung, gegen Störungen oder mutwillige Beschädigung empfindlich ist.

Der Erfindung liegt die Aufgabe zugrunde, eine vielseitig anwendbare Einrichtung zu schaffen, bei welcher Funktionen mittels eines elektronischen Schlüsselelements auslösbar sind, die sicherheitstechnischen Anforderungen ebenso gerecht wird wie einem gesteigerten Maß an Störungssicherheit und Handhabungssicherheit.

Diese Aufgabe wird gemäß der Erfindung durch die im Anspruch 1 angegebene Einrichtung gelöst, die durch die Merkmale der Unteransprüche in vorteilhafter Weise weiter ausgestaltet ist.

Aus der Zeitschrift Electronique Nr. 11, Oktober 1991, Seite 16, ist ein Eindraht-Speichermodul an sich bekannt, das ein Metallgehäuse aufweist und maschinell lesbare gespeicherte Daten enthält. Dieses soll als Ersatz von Barcode-Etiketten dienen und selbstklebend auf Gegenständen angebracht werden können, beispielsweise um den Gegenstand identifizieren zu können. Zugleich ist aber dort auch erwähnt, daß ein derartiger Eindraht-Speichermodul auch für Zwecke der Zugangskontrolle eingesetzt werden kann.

Mit der erfindungsgemäßen Einrichtung ist es möglich, eine Mehrzahl verschiedener Funktionen auszulösen, wobei jede Funktion wahlweise abgerufen werden kann, indem das Schlüsselelement in Anlage an einen der betreffenden Funktion zugeordneten Fühler gebracht wird. Damit eröffnen sich breite Anwendungsmöglichkeiten der erfindungsgemäßen Einrichtung.

Der Lesekopf der erfindungsgemäßen Einrichtung in seiner Ausbildung mit Eindrahtfühlern erfordert lediglich ein In-Berührung-Bringen des Schlüsselelements damit, also einfach das Anlegen des Eindraht-Speichermoduls an einen Eindrahtfühler, ohne daß irgendeine Relativbewegung zwischen Fühler und Schlüsselelement erforderlich ist oder das Schlüsselelement in einen Schlitz oder eine Öffnung des Lesekopfes eingeführt werden muß. Damit weist die erfindungsgemäße Einrichtung gegenüber herkömmlichen Magnetkartensystemen als bedeutende Vorteile einen bei weitem geringeren Herstellungspreis, eine weitaus geringere Störanfälligkeit und praktisch keinen Ansatzpunkt für Sabotageakte auf.

Bei der erfindungsgemäßen Einrichtung ist es über die bloße Schlüsselfunktion des Schlüsselelements hinaus ebenso wie bei Magnetkarten möglich, die im Eindraht-Speichermodul gespeicherte Information durch Überschreiben zu verändern. Dadurch können Funktionen realisiert werden, bei denen außer einer Identifikation des Benutzers des Schlüsselelements beispielsweise Geldbeträge von einem auf dem Schlüsselelement gespeicherten Guthabenbetrag abgebucht, werden. Anwendungsbeispiele hierfür wären Telefone ähnlich den bekannten Kartentelefonen, Tankautomaten oder ähnliches. Tankautomaten wären außerdem ein Beispiel für die Verwendung einer Mehrzahl von Fühlern, von denen jeder eine Auslösung der Freigabe einer bestimmten unterschiedlichen Menge oder Sorte Treibstoff bewirkt.

Das als Schlüsselelement der Einrichtung nach der Erfindung dienende Speichermodul braucht lediglich die Größe einer Knopfzelle bzw. eines mittleren Geldstücks zu haben und weist einen eingebauten Speicherchip mit zugehöriger Elektronik sowie eine eingebaute Batterie auf, welche die gespeicherten Daten garantiert über Jahre, z.B. bis ca. 10 Jahre, sichert, und ist hermetisch gekapselt.

Das Speichermodul kann beispielsweise mittels eines handelsüblichen Personalcomputers und eines über eine Schnittstelle angeschlossenen Metallfühlers beliebig oft gelöscht und neu beschrieben werden. Ein RAM-Speichermodul in der beschriebenen Ausführung würde ca. 5,00 DM kosten.

Der Lesekopf bzw. Lese/Schreibkopf der erfindungsgemäßen Einrichtung ist ein einfacher Metallfühler, mit welchem das das Schlüsselelement bildende Speichermodul in Kontakt gebracht wird. Dieser Metallfühler ist mit der übrigen Prozessoreinheit zweckmäßigerweise über ein Koppelmodul verbunden, das über einen Steckverbinder mit einem Prozessormodul verbunden sein kann, was einen einfachen Austausch im Fehlerfall ermöglicht. Die Prozessoreinheit wird mittels einer ihr zugeordneten Steuereinheit, beispielsweise in Form eines Steuermoduls, in ihren Funktionsabläufen automatisch gesteuert. Diese überwacht auch den Zustand des Fühlers und reagiert automatisch auf das Anlegen eines Schlüsselelement-Speichermoduls an den Fühler und löst die entsprechenden Leseoperation aus.

Die Erfindung wird nachstehend unter Bezugnahme auf die anliegenden Zeichnungen anhand von Ausführungsbeispielen näher erläutert. In den Zeichnungen zeigen:
- Fig. 1: eine Einrichtung nach der Erfindung zur Steuerung mehrerer Funktionen mit externer Adressierung der Funktionselemente,
- Fig. 1a: eine Einrichtung nach der Erfindung zur Steuerung mehrerer Funktionen mit interner Adressierung der Funktionselemente,
- die Fig. 2a, 2b, 2c: Diagramme, welche die Arbeitsweise der Prozessoreinheit der erfindungsgemäßen Einrichtung verdeutlichen,
- Fig. 3: den modularen Aufbau der erfindungsgemäßen Einrichtung,
- die Fig. 4a, 4b, 4c: jeweils in schematischer Darstellung praktische Anwendungsbeispiele der erfindungsgemäßen Einrichtung,
- die Fig. 5a, 5b: das Programmieren des Schlüsselelements und die Anwendung an einem Automaten mit Abbuchung eines Geldbetrags, und
- die Fig. 6a, 6b: Anwendung und Auswertung eines Schlüsselelements bei einer Einrichtung mit Benutzungsregistrierung.

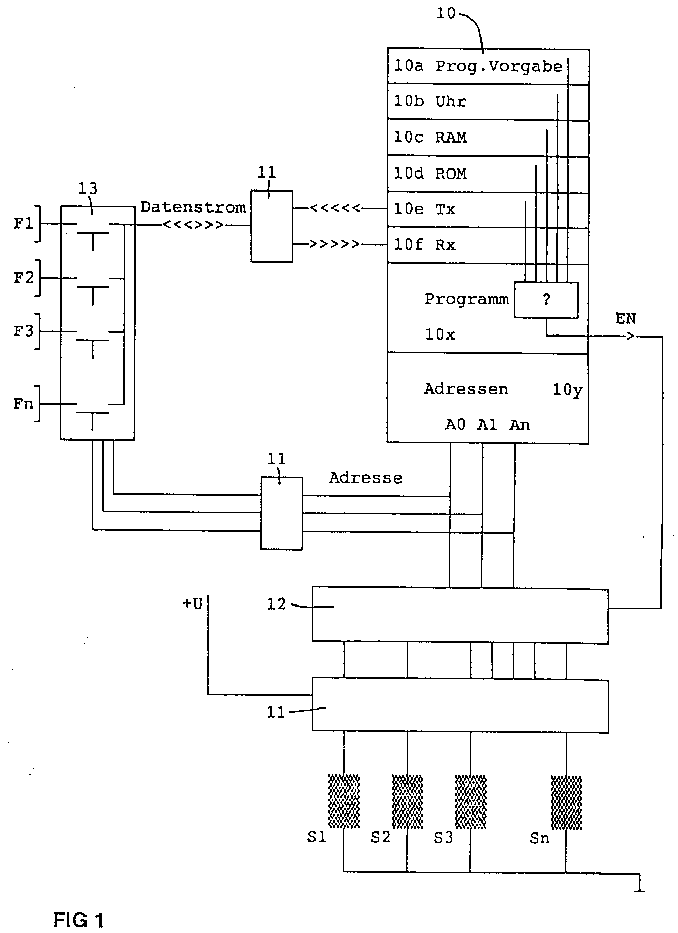

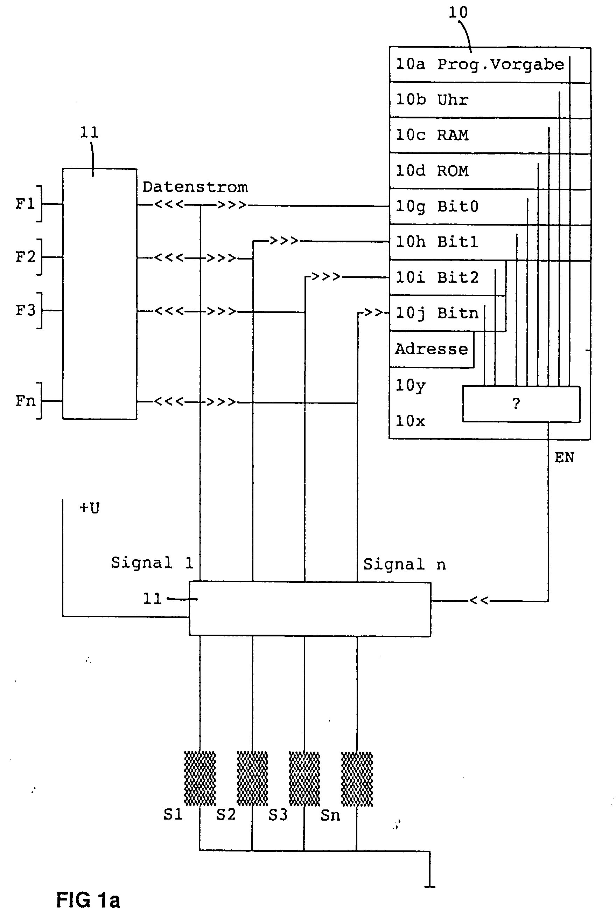

Fig. 1 zeigt die Prozessoreinheit einer erfindungsgemäßen Einrichtung mit einem Prozessor 10 als Hauptkomponente. Der Prozessor 10 enthält, wie durch entsprechende Blöcke dargestellt ist, einen Programmvorgabeteil 10a, ein Uhrzeitregister 10b, einen RAM-Schreib/Lesespeicher 10c, einen ROM-Programmspeicher 10d, ein Senderegister (Tx) 10e, ein Empfangsregister (Rx) 10f, eine ein Arbeitsprogramm verarbeitende Zentraleinheit 10x, und ein Adressenregister 10y.

An den Prozessor 10 ist über einen Analogmultiplexer 13 eine Anzahl von zweipoligen Metallfühlerkontakten F1 bis Fn zur Kommunikation mit als Schlüsselelemente dienenden Speichermodulen angeschlossen. Die Datenleitung des Multiplexers 13 ist über einen Koppelbaustein 11, der eine galvanische Trennung herstellt, mit dem Senderegister 10e und dem Empfangsregister 10f des Prozessors 10 verbunden.

Die Adressenleitungen des Multiplexers 13 sind über einen weiteren Koppelbaustein 11 mit dem Adressenregister 10y verbunden, das außerdem mit einem externen Adressendekodierer 12 verbunden ist, an welchen wiederum über einen Koppelbaustein 11 den verschiedenen zu steuernden Funktionen zugeordnete Schaltelemente S1 bis Sn angeschlossen sind. Die Signalleitung EN zur Ansteuerung des jeweiligen Schaltelements verläuft von der Zentraleinheit 10x zum Adressendekodierer.

Die Anzahl n der Schaltelemente entspricht der Anzahl n der Fühler. Jedem Schaltelement ist ein bestimmter Fühler zugeordnet. Das Anlegen eines Schlüsselelements TIP an einen der Fühler bewirkt die Ansteuerung des zugehörigen Schaltelements.

Fig. 1a zeigt eine gegenüber derjenigen nach Fig. 1 abgewandelte Prozessoreinheit einer erfindungsgemäßen Einrichtung, wobei ein Prozessor 10 wiederum einen Programmvorgabeteil 10a, ein Uhrzeitregister 10b, einen RAM-Schreib/Lesespeicher 10c, einen ROM-Programmspeicher 10d, eine Zentraleinheit 10x und ein Adressenregister 10y enthält. Jedoch ist bei dieser Ausführungsform eine der Anzahl der Fühler entsprechende Anzahl von Ein/Ausgaberegistern 10g bis 10j vorgesehen. Die Fühler F1 bis Fn sind hier nicht, wie bei der Ausführungsform nach Fig. 1, über einen Multiplexer, sondern direkt über einen Koppelbaustein 11 mit dem jeweils zugeordneten Ein/Ausgaberegister verbunden, das außerdem über einen weiteren Koppelbaustein 11 mit einem jeweils zugeordneten Schaltelement S1 bis Sn verbunden ist. Die Ansteuersignalleitung EN verläuft von der Zentraleinheit zum Koppelbaustein 11 und steuert jeweils das jeweilige Schaltelement an, das mit dem von dem mit einem Schlüsselelement TIP in Kommunikation stehenden Fühler aktivierten Ein/Ausgaberegister verbunden ist.

Die Ausführungsformen nach den Fig. 1 und 1a unterscheiden sich also in der Art der Adressierung. Bei der externen Adressendekodierung nach Fig. 1 kann direkt vom Fühler auf daß Schaltelement adressiert werden. Es ergibt sich hierbei ein geringerer Aufwand bei den Koppelbausteinen, wenn mehr als zwei Fühler vorgesehen sind. Die in Fig. 1a dargestellte Ausführungsform mit interner Adressierung ist dagegen die wirtschaftlichere Alternative, wenn nicht mehr als zwei Fühler vorgesehen sein sollen.

Die Arbeitsweise der Prozessoreinheit wird nachstehend anhand der Ausführungsform nach Fig. 1 kurz erläutert.

Adreßphase: Der Prozessor 10 gibt über sein Adressenregister 10y eine Schaltelementadresse an den Analogmultiplexer 13, der darauf hin den Kontakt herstellt zwischen dem zugehörigen Fühler und dem Prozessordatenanschluß (Sende/Empfangsregister) 10e, 10f. Diese Adresse liegt gleichzeitig am Dekodierer 12 an.

Resetphase: Nachdem diese Verbindung hergestellt ist, sendet der Prozessor auf seinem Datenanschluß über eine definierte Zeit ein logisch-L-Signal. Der Prozessor kann nach Ablauf dieser definierten Zeit erkennen, ob ein Schlüsselelement TIP an dem betreffenden Fühler anliegt oder nicht. Dazu legt der Prozessor den Datenanschluß auf Empfang und fragt wiederunm über eine definierte Zeit den Status ab. Entspricht dieser Status einem logisch-H-Signal, dann liegt kein Schlüsselelement in Kontakt mit dem Fühler an und der Prozessor legt eine neue Adresse an den Multiplexer.

Datenphase: Entspricht der Pegel auf dem Datenanschluß während einer definierten Zeit einem logisch-L-Signal, befindet sich ein Schlüsselelement TIP in Kontakt mit dem Fühler und der Datenaustausch kann beginnen. Diese Zeit ist nicht von vornherein festgelegt. Gleichzeitig liegt die Adresse des Multiplexer-Eingangs, also des Fühlers, mit dem das Schlüsselelement TIP sich in Kontakt befindet, am Adressendekodierer 12 an.

Signalphase: Hierbei findet eine Datenüberprüfung bzw. ein Datenvergleich bzw. eine Verarbeitung der Daten statt, die aus dem Schlüsselelement TIP in den Prozessor eingelesen worden sind, um z.B. die Identifikation zu überprüfen, Rückmeldungen, beispielsweise Registrierungsdaten auf das Schlüsselelement TIP zu übertragen, oder beispielsweise Guthabenbeträge, die im Schlüsselement gespeichert sind, entsprechend der Inanspruchnahe einer Leistung zu reduzieren. Außerdem gibt der Prozessor über die Ansteuersignalleitung EN ein Ansteuersignal an das betreffende Schaltelement zur Auslösung der gewünschten Funktion.

Nach Durchführung der Ansteuerung des jeweiligen Schaltelements beginnt der dargestellte Zyklus von neuem mit der nächsten Adresse wiederum in einer neuen Adressphase.

Die Funktion bzw. Arbeitsweise der Anordnung nach Fig. la, die nicht mit einem Multiplexer arbeitet, läuft in entsprechend abgewandelter Form ab und ist für den Fachmann ohne weiteres ersichtlich, so daß auf eine besondere Darstellung verzichtet werden kann.

Die zum Schutz der Prozessorschaltkreise erforderliche galvanische Trennung zwischen den Fühlern und den Dateneingängen am Prozessor durch Koppelelemente 11 ist im Bereich der Datenwege bidirektional ausgeführt und im Bereich der Adreßwege einfach direktional. Bei mehr als zwei Fühlern ist die Verwendung eines Multiplexers, wie schon gesagt, wirtschaftlicher.

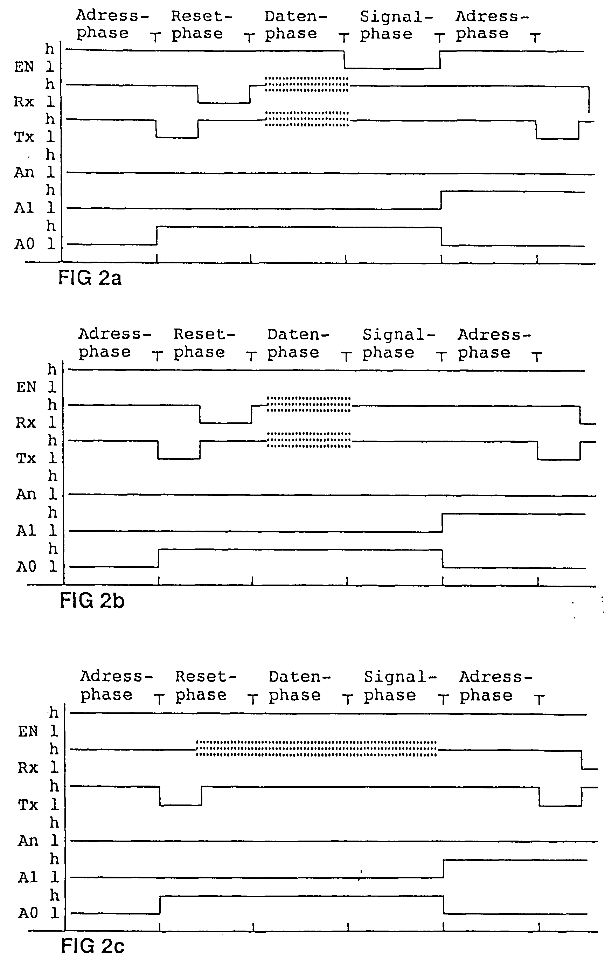

Die Fig. 2a, 2b und 2c verdeutlichen den oben dargestellten Arbeitszyklusablauf.

Fig. 2a läßt erkennen, wie das Schaltelement S1 (durch Ansteuersignal EN) nach erfolgtem Datenvergleich freigegeben wird.

Fig. 2b zeigt den Ablauf, bei welchem beim Datenvergleich keine Zulassung für das Schaltelement gegeben werden konnte.

Fig. 2c zeigt die Verhältnisse bei Kurzschluß oder einem unbestimmten Zustand am Fühler F1. In der Resetphase wird die Berührung des Fühlers F2 durch ein Schlüsselement TIP festgestellt.

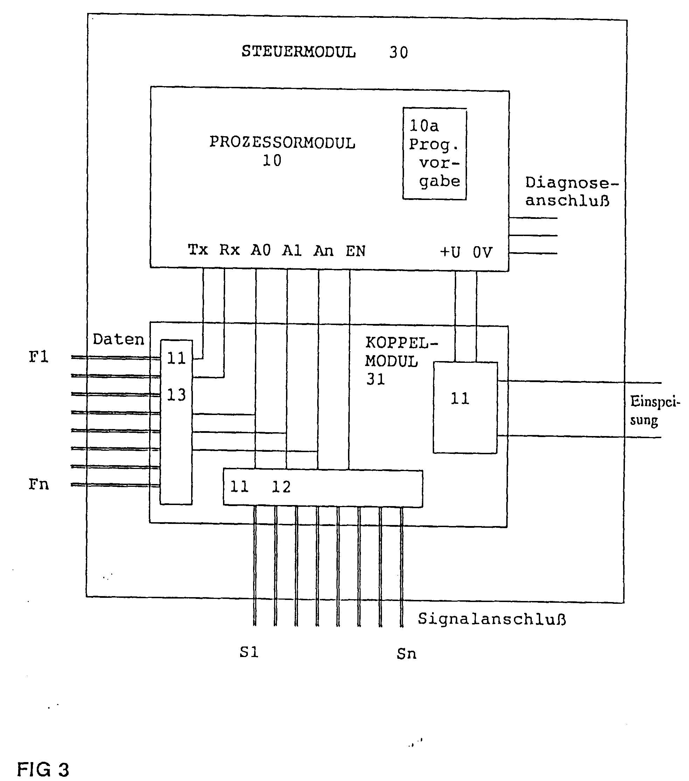

Fig. 3 zeigt die Ausführung der Prozessoreinheit in der Praxis in modularer Bauweise, wie sie für eine Serienherstellung geeignet ist. Die komplette Anordnung kann als Steuermodul 30 bezeichnet werden. Sie ist aufgebaut aus einem Prozessormodul 10, das den Prozessor nach Fig. 1 verkörpert, und aus einem Koppelmodul 31, das Koppelelemente 11, den Multiplexer 13 und den Adressendekodierer 12 umfaßt. Von diesem aus verlaufen die Datenleitungen nach außen zu den Fühlern F1 bis Fn, zu den Schaltelementen S1 bis Sn, sowie elektrische Speiseleitungen, während das Prozessormodul 10 einen Diagnoseanschluß zur Funktionsüberprüfung haben kann. Die in Fig. 3 dargestellte Anordnung entspricht also, wie ersichtlich, der schematisch in Fig. 1 dargestellten Anordnung.

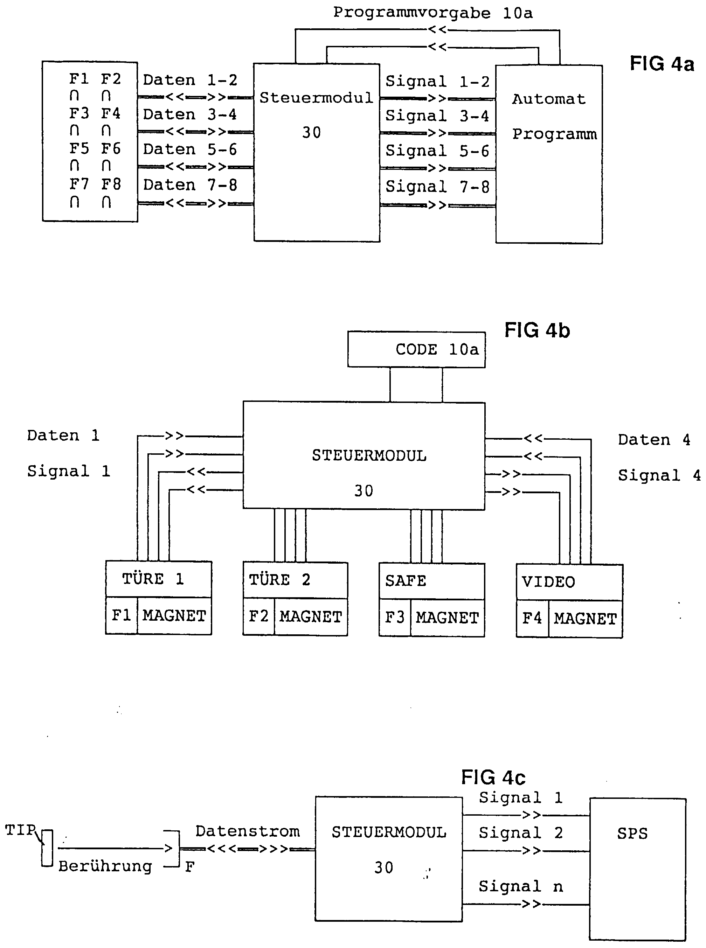

Fig. 4a zeigt schematisch, wie das Steuermodul 30 beispielsweise für einen Tankautomaten oder einen Briefmarkenautomaten eingesetzt werden kann. Wird beispielsweise der Fühler F4 mit dem Schlüsselelement TIP berührt, löst dies das Programm 4 aus und pumpt z.B. 40 Liter Benzin aus bei gleichzeitiger Kontoabbuchung, oder es erfolgt der Auswurf eines zugeordneten Briefmarkenwerts bei gleichzeitiger Kontoabbuchung entsprechend der Progammvorgabe 10a.

Fig. 4b zeigt schematisch eine mögliche Anwendung der erfindungsgemäßen Einrichtung mit dem Steuermodul 30 zum Öffnen verschiedener Türen bzw. Inbetriebsetzen bestimmter Einrichtungen nach Berechtigungsabfrage durch ein Schlüsselelement TIP.

Fig. 4c zeigt eine Anordnung, bei welcher über ein Steuermodul 30 mittels eines Schlüsselelements TIP beispielsweise eine Sicherheitssperre SPS in verschiedener Weise, nämlich über verschiedene Signale 1, 2 ... n, betätigt werden kann, beispielsweise durch verschiedene berechtigte Benutzer mit unterschiedlichem Berechtigungsgrad.

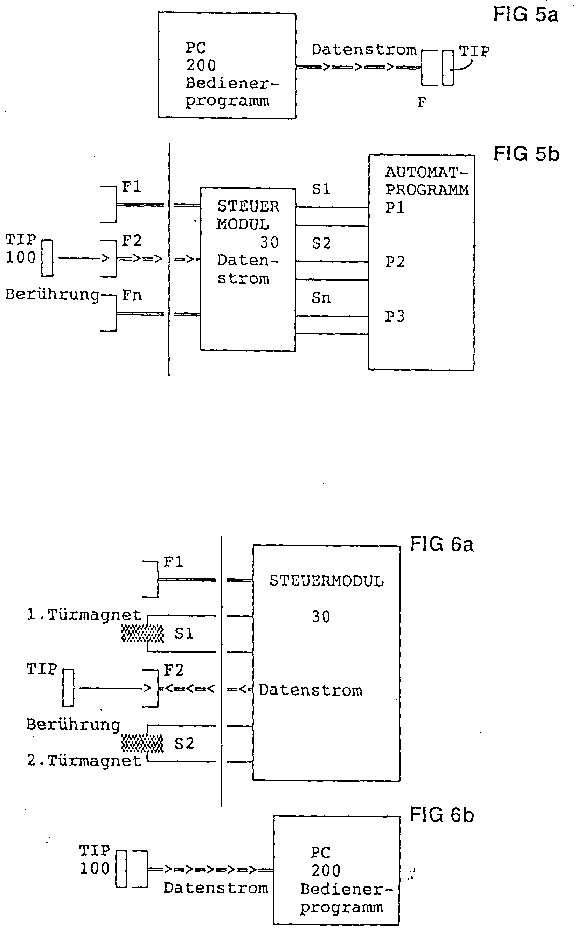

Fig. 5a zeigt schematisch, wie mittels eines Personalcomputers einem Schlüsselelement TIP beispielsweise ein Geldbetrag über einen Fühler F einprogrammiert werden kann.

Fig. 5b zeigt die praktische Anwendung eines gemäß Fig. 5a programmierten Schlüsselelements TIP, mit dem durch In-Berührung-Bringen mit einem zugeordneten Fühler (z.B. F2) über das Steuermodul 30 anhand eines Automatenprogramms aus einer Programmvielfalt P1, P2, P3 ein bestimmter Geldbetrag abgerufen werden kann, wobei hier durch Betätigung des Fühlers F2 das Programm T2 abgerufen wird.

Fig. 6a zeigt schematisch die Anwendung der erfindungsgemäßen Einrichtung bei einer Sicherheitssperre oder dergleichen, indem der Benutzer mit dem Schlüsselement TIP nacheinander durch Betätigen der Fühler F1 und F2 einen ersten Türmagneten S1 bzw. einen zweiten Türmagneten S2 betätigt. Fig. 6a kann aber auch als Einrichtung zur wahlweisen Betätigung einer von zwei Türen durch einen berechtigten Benutzer interpretiert werden, wobei, wie dargestellt, nicht nur das Öffnen der Tür erfolgt, sondern auch ein Datenrückfluß zum Schlüsselelement TIP stattfindet, beispielsweise zum Inkrementieren eines Benutzungszählers.

Fig. 6b zeigt, wie der Datenstand in einem Schlüsselelement TIP anhand eines Personalcomputers abgerufen und ausgewertet werden kann, um die Anzahl der Benutzungen oder angefallene Gebühreneinheiten für Abrechnungszwecke festzustellen.

## Patentansprüche

1. Elektronische Einrichtung zum Auslösen einer Funktion mittels eines Schlüsselelements, mit folgenden Merkmalen:
a) das Schlüsselelement (TIP) ist in Form eines kodierten, maschinell lesbaren elektronischen Eindraht-Speichermoduls ausgebildet,
b) eine Prozessoreinheit (10) dient zum Lesen der im Schlüsselelement gespeicherten Daten und zum Auslösen der Funktion, wobei das Lesen der Daten bitseriell bei Berührung des Schlüsselelements mit einem als Lesekopf dienenden Eindrahtfühler (F1 ... Fn) der Prozessoreinheit erfolgt,
c) die Prozessoreinheit (10) weist eine Mehrzahl von Eindrahtfühlern (F1 ... Fn) zur Auslösung gleicher oder verschiedener Funktionen auf,
d) die Eindrahtfühler (F1 ... Fn) sind über ein Koppelelement (11) mit der übrigen Prozessoreinheit (10) verbunden,
e) jedem Eindrahtfühler (F1 ... Fn) entspricht ein Schaltelement (S1 ... Sn) zur Steuerung jeweils einer bestimmten Funktion,
f) die Prozessoreinheit weist eine Programmsteuerung (10a, 10b, 10c und 10d), eine Zentraleinheit (10x) und eine Adreßsteuerung (10y, 12) zur Adressierung des jeweiligen Schaltelements in Abhängigkeit von dem jeweils durch das Schlüsselelement betätigten Eindrahtfühler auf.

2. Einrichtung nach Anspruch 1, dadurch gekennzeichnet, daß die Eindrahtfühler (F1 ... Fn) über einen Multiplexer (13) mit der übrigen Prozessoreinheit (10) verbunden sind.

3. Einrichtung nach Anspruch 1, dadurch gekennzeichnet, daß jeder der Eindrahtfühler (F1 ... Fn) mit einem ihm jeweils zugeordneten Ein/Ausgaberegister (10g ... 10j) verbunden ist, mit welchem auch das zugehörige Schaltelement (S1 ... Sn) verbunden ist.

4. Einrichtung nach einem der Ansprüche 1 bis 3, dadurch gekennzeichnet, daß das Schlüsselelement (TIP) als das Speichermodul und eine eingebaute Batterie enthaltende Kapsel in Form einer Knopfzelle ausgebildet ist.

5. Einrichtung nach einem der Ansprüche 1 bis 4, dadurch gekennzeichnet, daß das Speichermodul des Schlüsselelements (TIP) als löschbarer wiederbeschreibbarer Datenspeicher ausgebildet ist.

6. Einrichtung nach einem der Ansprüche 1 bis 5, dadurch gekennzeichnet, daß jeder Eindrahtfühler (F1 ... Fn) sowohl als Lese- wie auch als Schreibkopf für einen bidirektionalen Datenaustausch mit dem Schlüsselelement (TIP) betreibbar ist.

7. Einrichtung nach einem der Ansprüche 1 bis 6, dadurch gekennzeichnet, daß die Prozessoreinheit (10) durch Herstellen eines ohmschen Kontakts zwischen dem Schlüsselelement (TIP) und dem jeweiligen Eindrahtfühler (F1 ... Fn) aktivierbar ist.

8. Einrichtung nach einem der Ansprüche 1 bis 7, dadurch gekennzeichnet, daß die Prozessoreinheit modular aufgebaut ist und mindestens aus einem Prozessormodul (10) und einem Koppelmodul (31) besteht, über welches jeder Eindrahtfühler und jedes Schaltelement angeschlossen sind.

## Claims

1. An electronic apparatus for triggering a function by means of a key element, with the following features:
a) the key element (TIP) is constructed in the form of a coded, machine-readable electronic single-wire memory module,
b) a processor unit (10) serves for reading the data stored in the key element and for triggering the function, with the reading of the data occurring in bit-serial manner upon the contact of the key element with a single-wire sensor (F1 ... Fn) of the processor unit serving as a reading head,
c) the processor unit (10) has a plurality of single-wire sensors (F1 ... Fn) to trigger the same or different functions,
d) the single-wire sensors (F1 .. Fn) are connected via a coupling element (11) to the remaining processor unit (1),
e) a switching element (S1 ... Sn) for controlling in each case a determined function corresponds to each single-wire sensor (F1 ... Fn),
f) the processor unit has a program control (10a, 10b, 10c and 10d), a central processing unit (10x), and an address control (10y, 12) for addressing the respective switching element as a function of the single-wire sensor operated by the key element in each case.

2. An apparatus according to Claim 1,
**characterised in that** the single-wire sensors (F1 ...Fn) are connected to the remaining processor unit (l0) via a multiplexer (13).

3. An apparatus according to Claim 1,
**characterised in that** each of the single wire sensors (F1 ... Fn) is connected with an input/output register (10g ... 10j) associated therewith in each case, with which the switching element (S1 ... Sn) is also connected.

4. An apparatus according to one of Claims 1 to 3,
**characterised in that** the key element (TIP) is constructed as the memory module and a capsule containing an integrated battery in the form of a button cell.

5. An apparatus according to one of Clams 1 to 4,
**characterised in that** the memory module of the key element (TIP) is constructed as an erasable rewritable data memory.

6. An apparatus according to one of Claims 1 to 5,
**characterised in that** each single-wire sensor (F1 ... Fn) can be operated both as a reading and also as a writing head for a bidirectional data exchange with the key element (TIP).

7. An apparatus according to one of Claims 1 to 6,
**characterised in that** the processor unit (10) can be activated by producing an ohmic contact between the key element (TIP) and the respective single-wire sensor (F1 ... Fn).

8. An apparatus according to one of Claims 1 to 7,
**characterised in that** the processor unit has a modular construction and consists at least of a processor module (10) and a coupling module (31), via which each single-wire sensor and each switching element are connected.

## Revendications

1. Dispositif électronique pour déclencher une fonction à l'aide d'un élément formant clé, présentant les caractéristiques suivantes:
a) l'élément clé (TIP) est agencé sous la forme d'un module électronique de mémoire monofil, codé, lu automatiquement,
b) une unité de traitement (10) pour lire les données mémorisées dans l'élément clé et déclencher la fonction, la lecture des données ayant lieu en série par bit, par contact avec l'élément-clé, à l'aide d'un détecteur (F1...Fn) monofil de l'unité de traitement, servant de tête de lecture,
c) l'unité de traitement (10) comporte plusieurs détecteurs (F1...Fn) monofils pour déclencher des fonctions identiques ou différentes,
d) les détecteurs (F1...Fn) monofils sont reliés par un élément de couplage (11) au reste de l'unité de traitement (10),
e) à chaque détecteur (F1...Fn) monofil correspond à un élément logique (S1...Sn) pour déclencher une fonction déterminée,
f) l'unité de traitement comporte une commande par programme (10a, 10b, 10c et 10d), une unité centrale (10x) et une commande d'adressage (10y, 12) pour adresser l'élément logique concerné en fonction du détecteur monofil activé par l'élément-clé.

2. Dispositif selon la revendication 1, caractérisé par le fait que les détecteurs (F1...Fn) monofils sont reliés à l'unité de traitement (10) par l'intermédiaire d'un multiplexeur (13).

3. Dispositif selon la revendication 1, caractérisé par le fait que chaque détecteur (F1...Fn) monofil est relié à un registre d'entrée/sortie (10g...10j) propre associé, auquel est également relié l'élément logique (S1...Sn) correspondant.

4. Dispositif selon l'une des revendications 1 à 3, caractérisé par le fait que l'élément-clé (TIP) est agencé sous la forme d'un boîtier contenant le module de mémoire et une batterie intégrée de type "pile ronde".

5. Dispositif selon l'une des revendications 1 à 4, caractérisé par le fait que le module de mémoire de l'élément-clé (TIP) est agencé sous la forme d'une mémoire de données effaçable et réinscriptible.

6. Dispositif selon l'une des revendications 1 à 5, caractérisé par le fait que chaque détecteur (F1...Fn) monofil peut être utilisé aussi bien en tête de lecture qu'en tête d'écriture pour un échange de données bidirectionnel avec l'élément-clé (TIP).

7. Dispositif selon l'une des revendications 1 à 6, caractérisé par le fait que l'unité de traitement (10) peut être activée en réalisant un contact ohmique entre l'élément-clé et le détecteur (F1...Fn) monofil concerné.

8. Dispositif selon l'une des revendications 1 à 7, caractérisé par le fait que l'unité de traitement présente une construction modulaire et se compose d'au moins un module de traitement (10) et d'un module de couplage (31) par l'intermédiaire duquel chaque détecteur (F1...Fn) monofil et chaque élément logique sont connectés.
